(19) Europäisches Patentamt
European Patent Office
Office européen des brevets

(11) Publication number: **0 570 159 A1**

# (12) EUROPEAN PATENT APPLICATION

(21) Application number: **93303529.7**

(22) Date of filing: **07.05.93**

(51) Int. Cl.[5]: **C08K 5/09**, C08L 21/00, C08J 5/10

(30) Priority: **13.05.92 JP 120429/92**

(43) Date of publication of application: **18.11.93 Bulletin 93/46**

(84) Designated Contracting States: **CH DE ES FR GB IT LI**

(71) Applicant: **SUMITOMO CHEMICAL COMPANY, LIMITED**
**5-33, Kitahama 4-chome Chuo-ku**
**Osaka (JP)**

(72) Inventor: **Yamamoto, Keisaku**
**5-3-14, Aobadai**
**Ichihara-shi, Chiba 299-01 (JP)**
Inventor: **Ikeda, Kiyoshi**
**152-1, Ichihara**
**Ichihara-shi, Chiba 290 (JP)**
Inventor: **Koshiba, Junichi**
**1-9-826, Yuushuudainishi**
**Ichihara-shi, Chiba 299-01 (JP)**

(74) Representative: **Cresswell, Thomas Anthony et al**
**J.A. Kemp & Co. 14 South Square Gray's Inn**
**London WC1R 5LX (GB)**

## (54) Rubber compositions for curing-bonding, method of cure-bonding and metal-rubber bonded articles.

(57) Rubber compositions for cure-bonding to metals comprise a rubber component and at least one metal acrylate compound of formula (I):

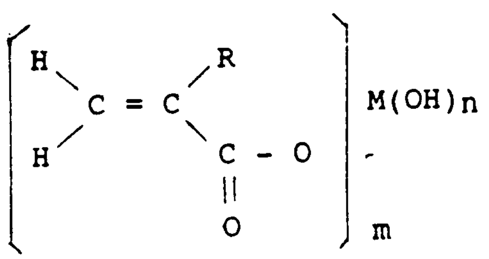

(I)

wherein R is hydrogen or methyl, M is a mono-, di- or tri- valent metal atom, m is 1, 2, or 3 and n is 0, 1 or 2 and may be bonded to the metal without using adhesives by curing in contact with metal.

EP 0 570 159 A1

The present invention relates to rubber compositions for cure-bonding, a method of cure-bonding and metal-rubber bonded articles. More particularly, the present inventicn relates to a technique of bonding a metal and a rubber which can be applied to a wide variety of combinations of metals and rubbers without using adhesives and can provide a very large bonding strength with keeping the mechanical properties of rubbers at a high level.

It has been known that non-polar rubbers having a low unsaturation degree represented by ethylene-propylene rubber (EPM) and ethylene-propylene-nonconjugated diene rubber (EPDM) are inferior in adhesion to metals.

Under the circumstances, the task to be attained by the present invention is to provide a technique of bonding metals and rubbers which can be applied to a wide variety of combinations of rubbers and metals including non-polar rubbers having an unsaturation degree, need no adhesives and can provide a very large bonding strength with keeping the mechanical properties of rubbers at a high level.

The inventors have conducted intensive research in an attempt to attain the above task and have accomplished the present invention.

That is, one of the present inventions relates to a rubber composition for cure-bonding of metals which comprises a rubber component and at least one metal acrylate compound represented by the following formula (1):

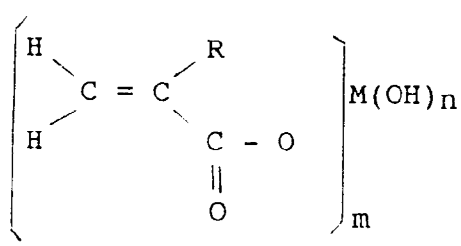 (I)

(wherein R represents a hydrogen atom or a methyl group, M represents a mono- to tri-valent metal atom, m represents an integer of 1 to 3 and n represents an integer of 0 to 2).

Another invention relates to a method for cure-bonding a metal and a rubber by curing the above rubber composition in contact with the metal.

Still another invention relates to a metal-rubber bonded article obtained by curing the above rubber composition in contact with the metal.

The rubber component in the present invention is unlimited and a wide variety of rubbers can be used. Examples of the rubbers are natural rubbers, isoprene rubbers, butadiene rubbers, styrene-butadiene rubbers, chloroprene rubbers, nitrile rubbers, butyl rubbers, ethylene-α-olefin copolymer rubbers or ethylene-α-olefin-nonconjugated diene copolymer rubbers (including ethylenepropylene rubber and ethylene-propylene-nonconjugated diene rubber), chlorosulfonated polyethylene rubbers, acrylic rubbers, epichlorohydrin rubbers, silicone rubbers, fluororubbers and mixtures thereof. One of the great merits of the present invention is that nonpolar rubbers having a low unsaturation degree such as ethylene-α-olefin copolymer rubbers and ethylene-α-olefin-nonconjugated diene copolymer rubbers which have been considered not to be able to provide sufficient adhesion according to the conventional methods can be used.

The metals used in the present invention are unlimited and various metals can be used. Examples are magnesium, calcium, barium, titanium, zirconium, iron, cobalt, beryllium, aluminum, chromium, manganese, nickel, copper, zinc, tin, cadmium, silver, platinum, gold and lead.

The metal acrylate compounds used in the present invention are those which are represented by the formula (I) mentioned above. In the formula, M represents a mono- to tri-valent metal atom. Examples of the metal atom are lithium, sodium, potassium, magnesium, calcium, strontium, barium, manganese, iron, cobalt, nickel, copper, silver, zinc and aluminum. Examples of the metal acrylate compounds are zinc acrylate, magnesium acrylate, aluminum hydroxyacrylate, zinc methacrylate, magnesium methacrylate and aluminum hydroxymethacrylate. The metal acrylate compounds may be used each alone or in combination of two or more.

The ratio of the rubber component and the metal acrylate compound is preferably 0.1-50 parts by weight of the metal acrylate compound per 100 parts by weight of the rubber component. When amount of the metal acrylate compound is too small, the bonding strength obtained is sometimes insufficient. When it is too large, the effect of increasing the bonding strength to be obtained by increasing the amount is saturated and this is uneconomical and besides, the mechanical properties of the rubber are sometimes deteriorated.

The rubber composition of the present invention is bonded to metals by so-called cure-bonding method which comprises curing the rubber composition in contact with metals. When the rubber component per se

has no curing sites, it is necessary to use a suitable curing agent. The curing agent is not critical and, for example, organic peroxides and sulfur can be used.

For curing, the rubber component and the metal acrylate compound of the present invention and optionally carbon black, organic peroxide, antioxidant, curing accelerator, processing aid, stearic acid, reinforcing agent, filler, plasticizer, softening agent and the like are mixed by ordinary kneaders such as rolls and Banbury mixer to obtain a curable rubber composition. Curing is generally carried out at a temperature of 120°C or higher, preferably 150-220°C for about 1-30 minutes. Any of press curing, steam curing and hot-air curing can be applied.

Thus, metal-rubber bonded articles where the metal and the rubber are bonded at a large bonding strength can be obtained. These articles include, for example, various electrical equipments and rubber vibration insulators for automobiles.

The present invention can be applied to various combinations of metal and rubbers. Since adhesives are not needed, there is no fear that the metal and the rubber to be bonded are stained with adhesives. Furthermore, the rubbers bonded by the present invention maintain the mechanical properties at high levels. The bonding strength realized by the present invention is markedly large with retaining these features.

The present invention is illustrated by the following examples and comparative examples.

Example 1

The components shown in the column of Example 1 in Table 1 (excluding the peroxide) were kneaded by a 1500 cc Banbury mixer adjusted to 90°C at a rotor velocity of 60 rpm for 5 minutes. Then, the mixture was kneaded with a peroxide by an open roll mill of 8 inches to obtain a rubber composition. Then, the rubber composition was allowed to contact with an iron sheet (SS41) and subjected to press curing (170°C x 15 minutes) at this state to carry out cure-bonding of the iron sheet and the rubber. Sticking of the rubber to the surface of the press was inhibited by putting a Teflon sheet between the surface of the press and the rubber composition. Evaluation of the properties was conducted in accordance with JIS K6301 unless otherwise especially notified.

Results of the evaluation are shown in Table 1.

Comparative Example 1

Example 1 was repeated except that the metal acrylate compound was not used. The conditions and the results are shown in Table 1.

Comparative Reference Example 1

Using the rubber composition of Comparative Example 1 which contained no metal acrylate compound, bonding of the rubber to a metal was carried out with a commercially available adhesive. That is, Chemlock 205 (trademark for an adhesive manufactured by Rhode Far East Incorporated) was coated on an iron sheet and air-dried for one day. Thereon was further coated Chemlock 238 (trademark for an adhesive manufactured by Rhode Far East Incorporated) and air-dried for one day. Thereafter, the rubber composition brought into close contact with the adhesive-coated side of the iron sheet under pressure was press cured (170°C x 15 minutes). The conditions and the results of evaluation are shown in Table 1.

The following can be seen from the results.

All of the Examples accoridng to the present invention resulted in satisfactory results.

On the other hand, no bonding strength was obtained in Comparative Example 1 where the metal acrylate compound of the present invention was not used. Moreover, the bonding strength obtained in Comparative Reference Example 1 where the metal acrylate compound of the present invention was not used and the conventional adhesives were used was smaller than that obtained in Example 1.

Table 1

| | Example 1 | Comparative Example 1 | Comparative Reference 1 |
|---|---|---|---|
| Components *1 (part by weight) | | | |
| Rubber component*2 | 100 | 100 | 100 |
| Metal acrylate compound*3 | 10 | 0 | 0 |
| Taic | 0 | 2 | 2 |
| Evaluation | | | |
| Bonding strength Kgf/cm | 7.9 | 0 | 6.0 |
| Properties of cured product*4 | | | |
| Tensile strength $Kgf/cm^2$ | 81 | 95 | 95 |
| Elongation % | 230 | 280 | 280 |
| Hardness JIS-A | 66 | 59 | 59 |
| Tear strength Kgf/cm | 21 | 19 | 19 |

*1 Components

In addition to the components indicated in Table 1, 100 parts by weight of SIEST SO (FEF carbon black manufactured by Tokai Carbon Co.), 50 parts by weight of PW-380 (paraffinic oil manufactured by Idemitsu Petrochemical Co.), 5 parts by weight of zinc oxide, 1 part by weight of stearic acid, 1 part by weight of aging inhibitor MB (antioxidant manufactured by Sumitomo Chemical Co., Ltd.) and 7 parts by weight of DCP (40%-dicumyl peroxide manufactured by Nippon Oil & Fats Co., Ltd.) were used as common components.

*2 Rubber components

Ethylene-propylene-ethylidenenorbornene copolymer rubber (Mooney viscosity $ML_{1+4}$ 100°C: 43; ethylene content: 50% by weight; iodine value: 11).

*3 Metal acrylate compound

The compound (zinc acrylate) represented by the formula (I) where R=hydrogen atom, M=Zn (zinc), m=2 and n=0 was used.

*4 Properties of cured product

Properties of the product cured at 170°C x 15 minutes.

As explained above, the present invention provides the technique for bonding metals and rubbers which can be applied to various combination of metals and rubbers including non-polar rubbers and according to which very large bonding strength can be obtained without using adhesives with maintaining the mechanical characteristics of rubbers at high levels.

## Claims

1. A rubber composition for cure-bonding to metals which composition comprises a rubber component and at least one metal acrylate compound of formula (I):

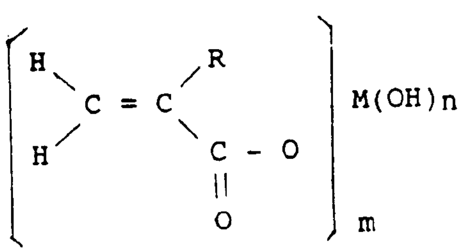

(I)

wherein R is a hydrogen or methyl, M is a mono-, di- or tri-valent metal atom, m is an integer of 1, 2 or 3 and n is 0 or an integer of 1 or 2.

2. A composition according to claim 1 wherein the rubber component is selected from natural rubbers, isoprene rubbers, butadiene rubbers, styrenebutadiene rubbers, chloroprene rubbers, nitrile rubbers, butyl rubbers, ethylene α-olefin copolymer rubbers and ethylene-α-olefin-nonconjugated diene copolymer rubbers.

3. A composition according to claim 2 wherein the rubber composition is selected from ethylenepropylene rubbers, ethylene-propylene-nonconjugated diene rubbers, chlorosulfonated polyethylene rubbers, acrylic rubbers, epichlorohydrin rubbers, silicone rubbers and fluororubbers.

4. A composition according to claim 3 wherein the rubber component is an ethylene-α-olefin copolymer rubber or an ethylene-α-olefin-nonconjugated diene copolymer rubber.

5. A composition according to any one of claims 1 to 4 wherein M in formula (I) is lithium, sodium, potassium, magnesium, calcium, strontium, barium, manganese, iron, cobalt, nickel, copper, silver, zinc or aluminum.

6. A composition according to any one of claims 1 to 5 wherein the compound of formula (I) is zinc acrylate, magnesium acrylate, aluminum hydroxyacrylate, zinc methacrylate, magnesium methacrylate or aluminum hydroxymethacrylate.

7. A composition according to any one of claims 1 to 6 comprising 0.1 to 50 parts by weight, based on 100 parts by weight of the rubber components of the compound of formula (I).

8. A process for cure-bonding metal and rubber which comprises curing a rubber composition according to any one of claims 1 to 7 in contact with a metal.

9. A metal-rubber bonded article obtainable by curing the rubber composition of claim 1 in contact with the metal.

10. A process according to claim 8 or an article according to claim 9 wherein the metal is selected from magnesium, calcium, barium, titanium, zirconium, iron, cobalt, beryllium, aluminium, chromium, manganese, nickel, copper, zinc, tin, cadmium, silver, platinum, gold and lead.

European Patent Office

# EUROPEAN SEARCH REPORT

Application Number
EP 93 30 3529

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 84, no. 16, 1975, Columbus, Ohio, US; abstract no. 106874n, Y.SAKURAMOTO ET AL. 'Vulcanisation and simultaneous adhesion of rubber to metals' * abstract * & JP-A-50 154 386 (NIPPON SHOKUBAI KAGAKU KOGYO CO.,LTD.) 12 December 1975 | 1-10 | C08K5/09<br>C08L21/00<br>C08J5/10 |
| X | WO-A-9 008 170 (UNIROYAL CHEMICAL COMPANY) * page 6, line 3 - line 12; claim 9 * | 1-10 | |
| X | DATABASE WPI Section Ch, Week 901, Derwent Publications Ltd., London, GB; Class A, AN 90-004108 & JP-A-1 287 154 (KAWAGUCHI CHEM IND KK) 17 November 1989 * abstract * | 1-2,5,7 | |
| | | | TECHNICAL FIELDS SEARCHED (Int. Cl.5) |
| | | | C08K<br>C08J |

The present search report has been drawn up for all claims

| Place of search | Date of completion of the search | Examiner |
|---|---|---|
| THE HAGUE | 18 AUGUST 1993 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)